**Europäisches Patentamt**

**European Patent Office**

**Office européen des brevets**

(19)

(11) Veröffentlichungsnummer: **0 168 851**
**B1**

(12) # EUROPÄISCHE PATENTSCHRIFT

(45) Veröffentlichungstag der Patentschrift:
**18.01.89**

(21) Anmeldenummer: **85200851.5**

(22) Anmeldetag: **25.05.85**

(51) Int. Cl.⁴: **F 16 C 33/20**, F 16 C 33/04

(54) **Verbundlager-Werkstoff.**

(30) Priorität: **14.07.84 DE 3425969**

(43) Veröffentlichungstag der Anmeldung:
**22.01.86 Patentblatt 86/4**

(45) Bekanntmachung des Hinweises auf die Patenterteilung:
**18.01.89 Patentblatt 89/3**

(84) Benannte Vertragsstaaten:
**AT DE FR GB IT SE**

(56) Entgegenhaltungen:
**EP-A- 0 003 856**
**FR-A- 2 237 083**
**FR-A- 2 357 777**
**FR-A- 2 378 976**
**GB-A- 2 097 486**

**Encyclopaedia of Chemical Technology, Vol. 18, Seiten 832, 833 und 844**

(73) Patentinhaber: **KOLBENSCHMIDT Aktiengesellschaft, Christian-Schmidt-Strasse 8/12 Postfach 1351, D-7107 Neckarsulm (DE)**

(72) Erfinder: **Bickle, Wolfgang, Friedenstrasse 15, D-6831 Rellingen (DE)**
Erfinder: **Pfestorf, Harald, Panoramastrasse 18/1, D-7101 Untereisesheim (DE)**

(74) Vertreter: **Rieger, Harald, Dr., Reuterweg 14, D-6000 Frankfurt am Main (DE)**

## Beschreibung

Die Erfindung betrifft einen Verbundlager-Werkstoff nach dem Oberbegriff des Anspruchs 1. Ein solcher Werkstoff ist aus der EP-A-3 856 bekannt.

Aus Verbundlager-Werkstoffen gefertigte Lagerschalen und Anlaufscheiben sind zur Lagerung von Kurbelwellen in modernen Brennkraftmaschinen nicht mehr wegzudenken. Sie bestehen in aller Regel aus einem Stahlrücken, der ggf. auch durch Gusseisen ersetzt sein kann, mit einer dicht aufgespritzten, dicht aufgesinterten oder aufgegossenen Kupfer-Lagerlegierung bzw. einer aufplattierten oder dicht aufgespritzten Aluminium-Lagerlegierung, wie AlSn2OCu oder AlZn4, 5SiCuPb. Als Kupfer-Lagerlegierungen kommt vorzugsweise Zinn-, Blei- bzw. Zinn-Bleibronze zur Anwendung. Auf der Lagermetallschicht befindet sich eine galvanisch abgeschiedene Gleitschicht aus Blei, Zinn und Kupfer oder Blei und Iridium. Ein solcher Verbundlager-Werkstoff zeichnet sich durch hohe Belastbarkeit, ausgezeichnete Gleiteigenschaften und gute Notlaufeigenschaften aus. Andererseits ist jedoch bekannt, dass die Kurbelwellenlager als Glied der Kette Brennraum – Kolben – Kolbenbolzen – Pleuelstange – Kurbelwelle – Kurbelgehäuse entscheidend zur Körperschall-Anregung und damit zur Geräuschabstrahlung der Brennkraftmaschine beitragen. Das gilt insbesondere für solche Brennkraftmaschinen und Fahrzeuge, die zwecks Kraftstoffeinsparung in Leichtbauweise ausgeführt sind und/oder deren Verbrennung optimiert ist. Leichte Konstruktionen sind erfahrungsgemäss lauter als schwere; harte und damit laute Verbrennungen sind verbrauchsgünstiger. Die Geräuschreduzierung gewinnt in letzter Zeit zunehmend an Bedeutung. Dies ist bedingt sowohl durch die verschärften Umweltschutzbestimmungen als auch durch die Leichtbauweise sowie die gestiegenen Komfortansprüche. Man ist deshalb bestrebt, die Kurbelwellen von dem Kurbelgehäuse soweit wie möglich akustisch zu entkoppeln. So ist in der DE-A-3 216 318 vorgesehen, die unmittelbar körperschallerregten Teile, wie Zylinder, Zylinderkopf, Kolben, Pleuel, Kurbelwellenlager und Kurbelwelle, in einem Triebwerksträger anzuordnen, der seinerseits elastisch mit dem Kurbelgehäuse verbunden ist. Eine solche Bauweise ist wegen des relativ hohen Aufwands für Brennkraftmaschinen von Fahrzeugen nicht geeignet. Die GB-A-1 137 693 schlägt vor, die Kurbelwellenlager über Schwingungsdämpfer in Form von elastischen Büchsen im Kurbelgehäuse anzuordnen, um die Übertragung von Körperschall von der Kurbelwelle auf das Kurbelgehäuse zu verringern. In dem DE-U-8 309 053 ist ein Kurbelwellenlager beschrieben, bei dem zwischen dem Lager und dem Kurbelgehäuse zusätzlich eine elastische Schicht in Folienstärke aus einem wärmebeständigen Kunststoff wie Polytetrafluoräthylen oder Polyamid angeordnet ist. Schliesslich sieht die DE-A-3 017 847 ein Kurbelwellenlager vor, bei dem zwischen einer äusseren Lagerschale und einer inneren Lagerschale ein schwingungsdämpfendes Material angeordnet ist. Diese vergleichsweise komplizierte Konstruktion benötigt einen grossen Bauraum.

Es ist die Aufgabe der vorliegenden Erfindung, einen Verbundlager-Werkstoff zu schaffen, bei dem die daraus gefertigen Lagerschalen und Anlaufscheiben für Kurbelwellen eine geräuschdämpfende Wirkung sowie ein gutes Verhalten bezüglich Belastbarkeit, Gleiteigenschaften und Notlaufeigenschaften besitzen. Diese Aufgabe wird durch die kennzeichnenden Merkmale des Anspruchs 1 gelöst.

Die Notlaufeigenschaften des Verbundlager-Werkstoffs können durch Zusätze von Blei, Graphit, Molybdänsulfid oder dergleichen in einer Menge von 5 bis 40 Gew.% zum PES verbessert werden.

Zur Verbesserung des Verschleissverhaltens kann das PES Glasfasern, Kohlefasern und/oder Glasperlen in einer Menge von 5 bis 40 Gew.% enthalten.

Dieser Verbundlager-Werkstoff zeichnet sich dadurch aus, dass die daraus gefertigten Lagerschalen und Anlaufscheiben, infolge der guten Dämpfungseigenschaften des PES, zu einer deutlichen Verringerung der Körperschallanregung und damit zu einer Reduzierung der Geräuschabstrahlung der Brennkraftmaschine führen. Darüber hinaus ist der Verbundlager-Werkstoff bei Betriebstemperaturen von grösser 160 °C, vorzugsweise 180 bis 200 °C, unter Belastung formbeständig und lässt relativ hohe Gleitgeschwindigkeiten von grösser 30 m/s zu. Ein weiterer Vorteil ist darin zu sehen, dass die aus PES bestehende Gleitschicht nachbearbeitbar ist, so dass die Lagerelemente mit hoher Massgenauigkeit gefertigt werden können. Das in Kirk-Othmer: Encyclopedia of Chemical Technology, Third Edition, Vol. 18, Seiten 832, 833 und 844 beschriebene PES besitzt eine ausgezeichnete Oxidationsbeständigkeit, Warmfestigkeit sowie mechanische Festigkeit und wird daher z.B. für Pumpengehäuse, Lagerkäfige und Radarkuppeln benutzt.

Es sind zwar Verbundlager bekannt, die aus einer Stahlstützschale mit porös aufgesinterter Zinn-Bronzeschicht bestehen, in die Polytetrafluoräthylen, Polyvinylidenfluorid, Polyoximethylen mit Zusätzen von Blei, Graphit oder Molybdänsulfid so eingedrückt ist, dass eine Gleitschicht des Kunststoff-Zusatz-Gemisches über der Zinn-Bronzeschicht vorhanden ist (VDI-Richtlinien 2543, Verbundlager mit Kunststoff-Laufschicht, April 1977; DE-C-2 928 081). Diese Verbundwerkstoffe werden bevorzugt ohne Schmierung eingesetzt. Die daraus hergestellten Lagerelemente sind im allgemeinen sehr hoch belastbar, bis ca. 150 N/mm², allerdings nur bei ausserordentlich niedrigen Gleitgeschwindigkeiten. Eine Gleitgeschwindigkeit von 1 m/s ist schon als gross anzusehen. Als echte Grenze darf man 2 m/s bei Trockenlauf und 3 m/s bei Initialschmierung ansetzen. Bei solchen Gleitgeschwindigkeiten ist natürlich keine nennenswerte Belastung mehr möglich.

Derartige Verbundlager sind hauptsächlich für oszillierende Bewegungen eingesetzt, wie beispielsweise Gelenklager oder als Führungsbuchsen in Stossdämpfern für Kraftfahrzeuge.

Für grössere Belastungen bei höheren Gleitgeschwindigkeiten von grösser 30 m/s ist der in der GB-A-2 079 867 beschriebene Verbundlager-Werkstoff geeignet, bei dem die auf einem Stahlrücken befindliche Bronzeschicht so weit mit Polyetherketon gefüllt ist, dass über der Bronzeschicht eine Deckschicht des Kunststoffs vorhanden ist. Dieser Verbundlager-Werkstoff ist für die Herstellung von Lagerelementen geeignet, die Betriebstemperaturen bis 200 °C aushalten müssen. Allerdings sinkt im Temperaturbereich ab etwa 120 °C die Belastbarkeit deutlich ab, weil die Formbeständigkeit nicht mehr gewährleistet ist, so dass die Anwendung für geräuschdämmende Kurbelwellenlager in Brennkraftmaschinen nicht in Betracht kommt.

Im folgenden ist ein Ausführungsbeispiel für die Herstellung des erfindungsgemässen Werkstoffes für Verbundlager mit Kunststofflaufschicht beschrieben. Auf einen 2,5 mm dicken Stahlrücken wird eine poröse Schicht von 0,3 mm Dicke aus kugelförmigem Bronzepulver des Typs CuPb1OSn1O mit einer mittleren Korngrösse von ca. 90 μm bei einer Temperatur von ca. 800 °C aufgesintert. In einem anschliessenden Walzprozess wird darauf eine ca. 0,5 mm dicke Schicht aus einer Mischung aus 80 Gew.% PES und 20 Gew.% Blei aufgebracht, welche die Poren der Bronzeschicht vollständig ausfüllt und damit eine sehr gute Haftung zum Stahlrücken aufweist. Die Gleitschichtdicke über den Bronzespitzen beträgt dabei 0,1 bis 0,5 mm, im Mittel ca. 0,2 mm.

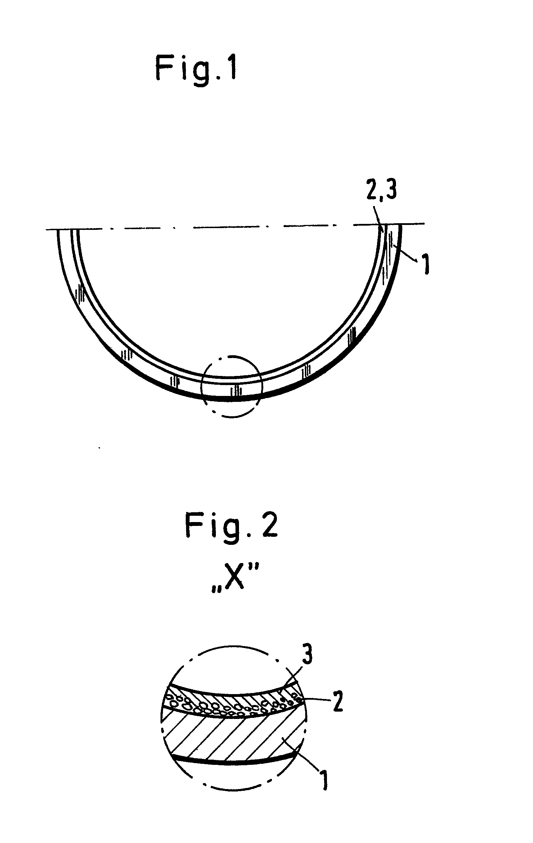

In der Zeichnung ist eine aus dem erfindungsgemäss aufgebauten Verbundlager-Werkstoff hergestellte initialgeschmierte Kurbelwellen-Lagerschale dargestellt, wobei Fig. 1 eine Seitenansicht der Kurbelwellen-Lagerschale und Fig. 2 eine vergrösserte Darstellung des Ausschnittes «X» der Fig. 1 zeigen. Auf dem Stahlrücken (1) befindet sich die porös aufgesinterte Zinn-Blei-Bronzeschicht (2), die mit der PES-Blei-Mischung (3) in der Weise gefüllt ist, dass über den Spitzen der Bronzeschicht eine Gleitschicht aus der gleichen Mischung vorhanden ist.

**Patentansprüche**

1. Zur Herstellung von Lagerschalen und Anlaufscheiben für Kurbelwellen, Verbundlager-Werkstoff bestehend aus einem metallischen Rücken (1), vorzugsweise Stahlrücken, mit einer 0,1 bis 0,5 mm dicken porös aufgesinterten oder aufgespritzten Lagermetallschicht (2) auf Kupfer- oder Aluminiumbasis, deren Poren mit einem polymeren Kunststoff gefüllt sind und auf der eine 0,05 bis 0,5 mm dicke Gleitschicht desselben polymeren Kunststoff angebracht ist, dadurch gekennzeichnet, dass zur Erreichung von guten Geräuschdämpfungseigenschaften der polymere Kunststoff Polyethersulfon (PES) ist.

2. Verbundlager-Werkstoff nach Anspruch 1, dadurch gekennzeichnet, dass das PES Zusätze von Blei, Graphit, Molybdänsulfid oder dergleichen in einer Menge von 5 bis 40 Gew.% enthält.

3. Verbundlager-Werkstoff nach Anspruch 1 und/oder Anspruch 2, dadurch gekennzeichnet, dass das PES Zusätze von Glasfasern, Kohlefasern und/oder Glasperlen in einer Menge von 5 bis 40 Gew.% enthält.

4. Verbundlager-Werkstoff nach den Ansprüchen 1 bis 3, dadurch gekennzeichnet, dass die Lagermetallschicht aus CuPb2OSn, CuSn1l oder dergleichen besteht.

**Claims**

1. Composite bearing material for the manufacture of bearing shells and thrust rings for crankshafts, consisting of a metallic backing (1), preferably a steel backing, with a 0.1 to 0.5 mm thick porous sintered-on or sprayed-on bearing metal layer (2) based on copper or aluminium, the pores of which are filled with a polymeric plastic and to which a 0.05 to 0.5 mm thick sliding surface layer of the same polymeric plastic is applied, characterised in that in order to obtain good silencing properties the polymeric plastic is polyether sulphone (PES).

2. Composite bearing material according to Claim 1, characterised in that the PES contains additives of lead, graphite, molybdenum sulphide or the like in a quantity of 5 to 40% weight.

3. Composite bearing material according to Claim 1 and/or Claim 2, characterised in that the PES contains additives of glass fibres, carbon fibres and/or glass beads in a quantity of 5 to 40% weight.

4. Composite bearing material according to Claims 1 to 3, characterised in that the bearing metal layer consists of CuPb2OSn, CuSn1l or the like.

**Revendications**

1. Matériau pour paliers composite destiné à la fabrication de coussinets de paliers et de disques de portée de vilebrequins constitués d'une partie dorsale (1) métallique, de préférence d'une partie dorsale en acier, avec une couche métallique de palier (2) déposée par frittage ou par projection, poreuse, de 0,1 à 0,5 mm d'épaisseur, à base de cuivre ou d'aluminium, dont les pores sont emplis d'une matière plastique polymère et sur laquelle est déposée une couche de glissement de 0,05 à 0,5 mm d'épaisseur en la même matière plastique polymère, caractérisé en ce que, pour obtenir de bonnes propriétés d'atténuation du bruit, la matière plastique polymère est une polyéthersulfone (PES).

2. Matériau pour paliers composites suivant la revendication 1, caractérisé en ce que la PES contient des additions de plomb, de graphite, de sulfure de molybdène ou de substances analogues en une quantité de 5 à 40% en poids.

3. Matériau pour paliers composites suivant la revendication 1 et/ou la revendication 2, caractérisé en ce que la PES contient des additions de fibres de verre, de fibres de carbone et/ou de perles de verre en une quantité de 5 à 40% en poids.

4. Matériau pour paliers composites suivant l'une des revendications 1 à 3, caractérisé en ce que la couche métallique formant palier est en CuPb2OSn, CuSn1l ou en une substance analogue.

# Fig.1

2,3

1

# Fig. 2

„X"

3

2

1